# EUROPÄISCHE PATENTSCHRIFT

(11) **EP 3 902 205 B1**
(45) Veröffentlichungstag und Bekanntmachung des Hinweises auf die Patenterteilung: **14.06.2023**
(21) Anmeldenummer: 20170659.5
(22) Anmeldetag: 21.04.2020
(51) Int. Cl.: H04L 12/40

(54) **ECHTZEITCOMPUTERSYSTEM UND VERFAHREN ZUR STEUERUNG EINER ANLAGE ODER EINES FAHRZEUGES**
REAL-TIME COMPUTER SYSTEM AND METHOD FOR CONTROLLING A SYSTEM OR A VEHICLE
SYSTÈME INFORMATIQUE EN TEMPS RÉEL ET PROCÉDÉ DE COMMANDE D'UNE INSTALLATION OU D'UN VÉHICULE

(43) Veröffentlichungstag der Anmeldung: 27.10.2021
(73) Patentinhaber: TTTech Auto AG, 1040 Wien (AT)
(72) Erfinder: Kopetz, Hermann, 2500 Baden (AT); POLEDNA, Stefan, 3400 Klosterneuburg (AT)
(74) Vertreter: Patentanwaltskanzlei Matschnig & Forsthuber OG

(56) Entgegenhaltungen:
- EP-A1- 3 182 652
- DE-B3-102012 101 957
- US-A1- 2006 026 017
- US-A1- 2014 343 740

## Beschreibung

Die Erfindung betrifft ein Echtzeitcomputersystem, insbesondere verteiltes Echtzeitcomputersystem, zur Steuerung einer technischen Vorrichtung, z.B. einer technischen Anlage oder einer Maschine, wie etwa einem Roboter oder einem Fahrzeug, insbesondere einem Kraftfahrzeug, wobei das Echtzeitcomputersystem Datenerfassungskomponenten umfasst, welche voneinander unabhängig sind, wobei die Datenerfassungskomponenten zur Erfassung von Sensordaten eingerichtet sind, sowie Datenverarbeitungskomponenten zur Verarbeitung der Sensordaten umfasst.

Die Erfindung liegt im Bereich der Computertechnik. Sie beschreibt ein Automatisierungssystem bzw. eine Architektur eines solchen Automatisierungssystems zum sicheren autonomen Betrieb einer technischen Vorrichtung, z.B. einer technischen Anlage oder einer Maschine, wie etwa einem Roboter oder einem Fahrzeug, insbesondere einem Kraftfahrzeug.

Der autonome Betrieb einer einer technischen Vorrichtung, z.B. einer technischen Anlage oder einer Maschine, wie etwa einem Roboter oder einem Fahrzeug, insbesondere einem Kraftfahrzeug erfordert ein Echtzeitcomputersystem, das die Umwelt der Maschine bzw. Anlage mit Sensoren beobachtet, mittels eines auf dem Echtzeitcomputersystem laufenden Prozessmodells die Führung eines Prozesses errechnet und über Aktoren den Ablauf der physikalischen Vorgänge beeinflusst; dies wird beispielhaft in US 2006/026017 A1 gezeigt.

Die Beobachtung der Umwelt kann beispielsweise mit optischen Sensoren (Kamera), LIDAR, Radarsensoren sowie diversen anderen Sensoren erfolgen. Die Auswertung der Sensordaten, die Datenfusion der Sensordaten und die Erstellung von erforderlichen Umweltmodelle sowie die Planung des gewünschten Prozessablaufs erfordern komplexe Softwarekomponenten mit Millionen von Befehlen.

In vielen Anwendungen, z.B. der autonomen Steuerung eines Fahrzeugs, kann ein auftretender Systemfehler im Echtzeitcomputersystem schwerwiegende Auswirkungen haben. Ein solcher Fehler kann durch einen transienten oder permanenten Ausfall der Hardware einer Komponente oder durch einen Defekt in der Software (Entwurfsfehler) ausgelöst werden. In sicherheitskritischen Anwendungen wird gefordert, dass die Mean-Time to Fail (*MTTF*) eines schwerwiegenden Ausfalls auf Systemebene größer als 10⁹ Stunden betragen muss.

Der ISO Standard ISO 26262 über funktionale Sicherheit zur Entwicklung, Prüfung und Zertifizierung von Software in sicherheitsrelevanten Anwendungen der Automobilindustrie führt vier ASIL (*Automotive Safety Integrity Levels*) Sicherheitsstufen ein, ASIL A (geringste Sicherheitsstufe), ASIL B, ASIL C und ASIL D (höchste Sicherheitsstufe).

Es wird angenommen, dass bei komplexen Softwarekomponenten mit Millionen von Befehlen selbst bei einem rigorosen Entwicklungsprozess und nach sehr umfangreichen Tests die geforderte Zuverlässigkeit von 10⁻⁹ Ausfällen/Stunde (entspricht etwa den Anforderungen von ASIL D) nicht erreicht werden kann. Zusätzlich zu den Softwarefehlern müssen in einer Software/Hardware (SW/HW) Komponente auch die Auswirkungen von transienten und permanenten Hardwarefehlern berücksichtigt werden. Die Auswirkungen eines transienten Hardwarefehlers sind von den Auswirkungen eines Softwarefehlers im Betrieb oft nicht zu unterscheiden.

Es ist eine Aufgabe der Erfindung, ein Echtzeitcomputersystem zur Steuerung einer technischen Vorrichtung bereitzustellen.

Die Erfindung schägt ein Echtzeitcomputersystem vor, bei welchem erfindungsgemäß vorgesehen ist, dass
- Datenerfassungskomponenten unsichere Komponenten sind,
- das Echtzeitcomputersystem weiters einen Zeitserver sowie ein erstes Kommunikationssystem und ein zweites Kommunikationssystem umfasst,
- wobei der Zeitserver dazu eingerichtet ist, globale Zeitsignale periodisch über eine oder mehrere unidirektionale Kommunikationsleitungen an das erste Kommunikationssystem und über eine oder mehrere unidirektionale Kommunikationsleitungen an das zweite Kommunikationssystem zu senden,
- wobei die Kommunikationssysteme voneinander unabhängig sind,
- und wobei jede Datenerfassungskomponente über mindestens zwei, vorzugsweise genau zwei Kommunikationskontroller verfügt, wobei jede Datenerfassungskomponente mit einem der zumindest zwei Kommunikationskontroller über zumindest eine, vorzugsweise genau eine Kommunikationsleitung an das erste Kommunikationssystem und mit einem anderen der zumindest zwei Kommunikationskontroller über zumindest eine, vorzugsweise genau eine Kommunikationsleitung an das zweite Kommunikationssystem angeschlossen ist, sodass jede Datenerfassungskomponente seine Sensordaten an jedes der zumindest zwei Kommunikationssysteme übertragen kann bzw. überträgt,
- und wobei jede Datenverarbeitungskomponente über mindestens zwei, vorzugsweise genau zwei Kommunikationskontroller verfügt, wobei jede Datenverarbeitungskomponente mit einem der zumindest zwei Kommunikationskontroller über zumindest eine, vorzugsweise genau eine Kommunikationsleitung an das erste Kommunikationssystem und mit einem anderen der zumindest zwei Kommunikationskontroller über zumindest eine, vorzugsweise genau eine Kommunikationsleitung an das zweite Kommunikationssystem angeschlossen ist, sodass jedes Kommunikationssystem die von den Datenerfassungskomponenten empfangenen Sensordaten an jede der Datenverarbeitungskomponenten übertragen kann bzw. überträgt,
sodass jede Datenverarbeitungskomponente die empfangenen Sensordaten verarbeiten kann.

Vorteilhafte Ausgestaltungen der Erfindung, welche jede alleine oder in beliebiger Kombination miteinande realisiert sein können, sind im Folgenden beschrieben:
- Vorzugsweise ist der Zeitserver fehlertolerant.
- Eine, insbesondere jede Datenverarbeitungskomponente, kann aus Verarbeitungs-Unterkomponenten, VUK, bestehen oder VUKs umfassen, die dazu eingerichtet sind, über ein nicht redundantes, unterlagertes Echtzeitkommunikationssystem, ein sogenanntes Echtzeit-Unterkommunikationssystem Echtzeitdaten auszutauschen, wobei das Echtzeit-Unterkommunikationssystem bzw. eine Nachrichtenverteilereinheit des Echtzeit-Unterkommunikationssystems, welche die an die Datenverarbeitungskomponente übertragenen Sensordaten übernimmt, über mindestens zwei Kommunikationskontroller verfügt, wobei einer der zumindest zwei Kommunikationskontroller dazu eingerichtet ist, die Sensordaten von dem ersten Kommunikationssystem zu übernehmen und ein anderer Kommunikationskontroller der zumindest zwei Kommunikationskontroller dazu eingerichtet ist, die Sensordaten von dem zweiten Kommunikationssystem zu übernehmen, und wobei das Echtzeit-Unterkommunikationssystem bzw. eine Nachrichtenverteilereinheit des Echtzeit-Unterkommunikationssystems einen weiteren Kommunikationskontroller umfasst, mit welchem sie mit einer Entscheidungskomponente verbunden ist.

- Die zumindest zwei Kommunikationssysteme des Echtzeitkommunikationssysteme sind vorzugsweise zeitgesteuert.
- Das Echtzeitcomputersystem oder die zumindest zwei unabhängigen Kommunikationssysteme können dazu eingerichtet sein, die Sensordaten an zumindest zwei oder mehr Datenverarbeitungskomponenten rückkopplungsfrei zu übertragen.
- Die Verbindungsleitungen zwischen den Datenerfassungskomponenten und/oder Datenverarbeitungskomponenten einerseits und den Kommunikationssystemen andererseits sind vorzugsweise galvanisch getrennt.
- Vorzugsweise kann eine Datenverarbeitungskomponente direkt auf einen Sensor zugreifen, der nur dieser Datenverarbeitungskomponente zugeordnet ist.
- Es kann vorgesehen sein, dass das Echtzeitcomputersystem eine Entscheidungskomponente umfasst, wobei jede Datenerfassungskomponente an diese Entscheidungskomponente angeschlossen ist, wobei vorzugsweise die Entscheidungskomponente fehlertolerante Hardware umfasst, auf welcher eine einfache Software ausgeführt wird.
- Es kann vorgesehen sein, dass eine Datenverarbeitungskomponente, welche eine Verletzung der Annahmen betreffend das spezifizierte *Operational Design Domain* (*ODD*) erkennt, dies an die Entscheidungskomponente mitteilt.
- Es kann vorgesehen sein, dass Funktionen, insbesondere alle Funktionen der Berechnung einer Trajektorie durch eine erste, insbesondere unsichere Datenverarbeitungskomponente, eine Überprüfung der Sicherheit dieser berechneten Trajektorie ausschließlich durch eine zweite, insbesondere unsichere Datenverarbeitungskomponente, und die Berechnung einer Notfalltrajektorie ausschließlich durch eine dritte, insbesondere unsichere Datenverarbeitungskomponente durchgeführt wird, und vorzugsweise eine Entscheidungsfindung, ob ein Fehler vorliegt, durch eine, vorzugsweise einfache Entscheidungskomponente durchgeführt wird. Die Ermittlung der Trajektorie und Überprüfung der Trajektorie sind somit voneinander klar getrennt.

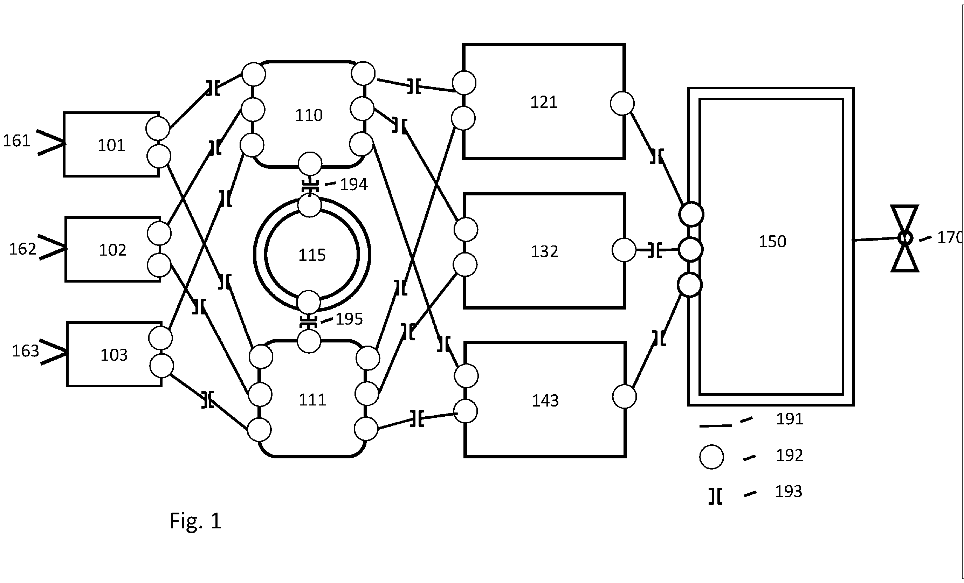

Dem vorgeschlagenen, insbesondere fehlertoleranten Echtzeitcomputersystem zum sicheren automatischen Betrieb einer Maschine oder eines Fahrzeugs liegen folgende Entwurfsprinzipien zugrunde:
- Eine Komponente ist eine Hardware/Software Einheit, die auf einer Betrachtungsebene eine spezifizierte Serviceleistung erbringt. Die Verarbeitung und der Transport von Daten sind Serviceleistungen, die von Komponenten erbracht werden.
- Der Begriff Komponente ist vorzugsweise rekursiv zu verstehen, d.h. die innere Struktur einer Komponente kann auf einer (oder mehreren) unterliegenden Betrachtungsebenen dargestellt werden. Die spezifizierten Serviceleistungen einer Komponente können auf der unterliegenden (detaillierteren) Betrachtungsebene durch eine Kombination von (unterliegenden) Komponenten erbracht werden.
- Es gibt zwei Arten von Komponenten: sichere Komponenten und unsichere Komponenten.
- Eine sichere Komponente beinhaltet eine Software, die nach den Regeln von ASIL D entwickelt wurde (= einfache Software). Eine einfache Software muss auf einer fehlertoleranten Hardware ausgeführt werden, um eine sichere Komponente zu bilden.
- Sichere Komponenten entsprechen den höchsten Sicherheitsanforderungen. In Fig. 1 sind die sicheren Komponenten durch einen doppelten Rahmen gekennzeichnet.
- Nicht fehlertolerante Hardware ist unsicher.
- Ein nicht-redundanter Sensor ist unsicher.
- Ein Ausfall einer unsicheren Komponente darf zu keinem sicherheitsrelevanten Ereignis auf Systemebene führen.

Die Mean-Time to Fail (MTTF) einer sicheren Komponente wird mit 10⁸ bis 10⁹ Stunden angenommen. Dieser Wert ergibt sich durch einen rigorosen Entwicklungsprozess einer einfachen Software nach ASIL D, so dass alle Entwurfsfehler während der Systementwicklung eliminiert werden können und aus der vorgeschriebenen Hardwareredundanz, die einen Einzelfehler in der Hardware maskiert.

Wenn eine Komponente nicht den oben beschriebenen Kriterien für eine sichere Komponente entspricht, ist sie eine unsichere Komponente.

Die Mean-Time to Fail (MTTF) einer unsicheren Komponente wird mit 10⁴ bis 10⁵ Stunden angenommen. Dieser Wert kann durch, insbesondere sorgfältiges, Entwickeln entsprechend ASIL B und ausführliches Testen im Feld und durch Simulation experimentell ermittelt werden. Durch eine entsprechende Anordnung von redundanten unsicheren Komponenten in der Systemarchitektur kann die hohe auf Systemebene geforderte Zuverlässigkeit erreicht werden.

Im Standard ISO 26262 wird die Thematik der Anordnung von unsicheren Komponenten behandelt. Wenn z.B. zwei ASIL B Komponenten ausfallen müssen, damit ein Systemausfall auftritt, so wird die Wahrscheinlichkeit eines Systemausfalls auf das Niveau einer ASIL D Komponente gesetzt.

Mit der vorliegenden Erfindung wird der Anteil der Hardware der Sensoren und des Kommunikationssystems, die redundant ausgeführt werden müssen, minimiert, sodass die Systemkosten geringgehalten werden können.

Die Erfindung wird an Hand der Zeichnung näher erörtert und veranschaulicht eine der vielen möglichen Ausprägungen der Erfindung. Es zeigt
Fig. 1 die Struktur eines erfindungsgemäßen Echtzeitcomputersystems,
Fig. 2 die innere Struktur einer Komponente des Echtzeitcomputersystems aus Figur 1,
Fig. 3 Systemzustände und Zustandsübergänge in einem solchen Echtzeitcomputersystem,
Fig. 4 ein Beispiel eines Zeitservers mit vier internen Komponenten,
Fig. 5 die Struktur eines verteilten Echtzeitcomputersystems mit vier Computern, die von einem fehlertoleranten Zeitserver gemäß Figur 4 mit periodischen externen Synchronisationsnachrichten versorgt werden,
Fig. 6 eine weitere Ausgestaltungsmöglichkeit eines Zeitservers,
Fig. 7 einen Zeitserver mit einem Empfänger zum Empfang von GPS Signalen zur Synchronisation der globalen Zeit mit der GPS Zeit, und
Fig. 8 einen Zeitserver gemäß Figur 7 mit Sensoren zur Erfassung des Zustandes der Umwelt.

**Figur 1** zeigt ein beispielhaftes Automatisierungssystem bzw. Echtzeitcomputersystem 100, welches Datenerfassungskomponenten (im Folgenden auch als "Sensorkomponenten" bezeichnet) 101,102, 103 umfasst, wobei die Sensorkomponente 101 einen Sensor 161, die Sensorkomponente 102 einen Sensor 162, und die Sensorkomponente 103 einen Sensor 163 umfasst. Weiters umfasst das Echtzeitcomputersystem 100 ein erstes zeitgesteuertes Kommunikationssystem 110 und ein zweites zeitgesteuertes Kommunikationssystem 111, sowie Datenverarbeitungskomponenten, in dem gezeigten Beispiel drei Datenverarbeitungskomponenten 121, 132, 143, sowie eine Entscheidungskomponente 150 und einen Aktuator 170.

Weiters umfasst das Echtzeitcomputersystem 100 einen Zeitserver, vorzugsweise einen fehlertoleranten Zeitserver 115, auf den weiter unten noch näher eingegangen wird.

Die Entscheidungskomponente 150 besteht aus fehlertoleranter Hardware mit einfacher Software, die nach ASIL D entwickelt wird bzw. die ASIL D entspricht, und wird daher als sicher angenommen.

Jede Komponente 101, 102, 103, 150, 121, 132, 143 sowie die zeitgesteuerten Kommunikationssysteme 110, 111 und der Zeitserver 115 weisen Kommunikationskontroller 192 auf, welche die Endpunkte von Kommunikationsleitungen 191, 194, 195 bilden. Alle Kommunikationsleitungen 191, 194, 195 weisen vorzugsweise galvanische Unterbrechungen 193 auf, welche eine Fehlerfortpflanzung eines Hardwarefehlers verhindern.

Die Entscheidungskomponente 150 und vorzugsweise der Zeitserver 115 sind sicher. Alle anderen angeführten Komponenten können unsicher sein.

Der fehlertolerante Zeitserver 115 stellt eine fehlertolerante globale Zeit, insbesondere eine fehlertolerante sparse globale Zeit, d.h. eine globale Zeit, die sparse ist [Kop11, S. 64], bereit. Der fehlertolerante Zeitserver 115 ist über die Kommunikationsleitung 194 mit dem ersten zeitgesteuerten Kommunikationssystem 110 und über die Kommunikationsleitung 195 mit dem zweiten zeitgesteuerten Kommunikationssystem 111 verbunden, sodass die beiden Kommunikationssysteme 110, 111 Zugriff auf die globale Zeit, insbesondere die sparse globale Zeit haben.

Alle angeführten Komponenten habe Zugriff auf eine fehlertolerante sparse globale Zeit [Kop11, S. 64], welche von den zeitgesteuerten Kommunikationssystemen 110, 111 zur Verfügung gestellt wird. Die fehlertolerante globale Zeit wird, wie oben erläutert, von dem sicheren fehlertoleranten Zeitserver 115 bereitgestellt und über die Kommunikationsleitung 194 periodisch an das zeitgesteuerte Kommunikationssysteme 110 und über die Kommunikationsleitung 195 periodisch an das das zeitgesteuerte Kommunikationssysteme 111 übertragen und von den Kommunikationssystemen 110, 111 verteilt. Die Leitungen sind vorzugsweise nur einfach ausgeführt, da die Kommunikationssysteme 110, 111 unsicher sind.

Vorzugsweise verfügt der sichere fehlertolerante Zeitserver 115 über mindestens vier unabhängige Taktgeber (Oszillatoren), um einen byzantinischen Fehler eines Taktgebers tolerieren zu können [Pea80].

Die Übertragung von Daten von den Kommunikationssystemen 110, 111 zu den Datenverarbeitungskomponenten 121, 132, 143 erfolgt rückkopplungsfrei nur in einer Richtung von den Kommunikationssystemen 110, 111 zu den Datenverarbeitungskomponenten 121, 132, 143. Eine Fehlerfortpflanzung von den Datenverarbeitungskomponenten 121, 132, 143 zu den Kommunikationssystemen 110, 111 und somit zu den Sensorkomponenten 101, 102, 103 ist daher nicht möglich. Es ist dem Fachmann bekannt, wie eine rückkopplungsfreie Kommunikation aufgebaut werden kann, z.B. durch unidirektionale Kommunikationskanäle, durch die Anordnung von Dioden in den Übertragungsleitungen, oder durch Maßnahmen in der Software.

Eine Übertragung von Daten von den Kommunikationssystemen 110, 111 zu den Sensorkomponenten 101, 102, 103 ist hingegen - zumindest für die Übertragung der globalen Zeit - möglich.

Die in den Sensorkomponenten 101, 102, 103 vorzugsweise vorverarbeiteten Sensordaten werden von den beiden zeitgesteuerten Kommunikationssysteme 110, 120 an die Datenverarbeitungskomponenten 121, 132, 143 übertragen. Im Normalfall, d.h. im fehlerfreien Fall, werden dabei die Sensordaten jeder Sensorkomponente 101, 102, 103 über jedes der beiden Kommunikationssysteme 110, 111 an jede der Datenverarbeitungskomponenten 121, 132, 143 übermittelt. Es wird angenommen, dass die Sensoren 161, 162, 163 z.B. mittels unterschiedlicher redundanter Verfahren die Umgebung beobachten und somit der Ausfall eines Sensors 161, 162, 163 bzw. einer Sensorkomponente 101, 102, 103 toleriert werden kann. Der Ausfall eines der beiden Kommunikationssysteme 110, 111 kann toleriert werden, da alle Komponenten an beide Kommunikationssysteme angeschlossen sind.

Beim autonomen Fahren bezeichnet der Begriff Trajektorie eines Fahrzeugs den Pfad, den das Fahrzeug als Funktion der Zeit ausführt. Der Begriff Trajektorie ist auch auf die Bewegung eines Roboterarms anwendbar.

Eine Trajektorie beschreibt die Laufbahn-das ist eine *glatte Kurve-* eines bewegten Objekts, sowie die Sollgeschwindigkeiten und die Zeitpunkte, die das Objekt an Wegpunkten der Laufbahn erreicht.

Jede Trajektorie ist durch eine Anzahl von Eigenschaften gekennzeichnet. Beispiele für die Eigenschaften einer Trajektorie sind: die Geschwindigkeit des Objekts, die Fliehkraft, die auf das Objekt wirkt, oder der Abstand eines Wegpunktes von einem Hindernis.

Eine sichere Trajektorie ist dadurch gekennzeichnet, dass wichtige Eigenschaften der Trajektorie innerhalb von Intervallen von vorgegebenen Grenzwerten liegen. Eine Eigenschaft ist wichtig, wenn eine Überschreitung eines Grenzwertes dieser Eigenschaft zu einem unbeabsichtigten Ereignis-einem Unfall- führen kann. Zum Beispiel ist der Grenzwert für die Fliehkraft, die auf ein bewegtes Objekt wirkt, eine wichtige Eigenschaft. Bei einem Fahrzeug hängt dieser Grenzwert einerseits von dem Objekt (der Geschwindigkeit des Fahrzeugs) und andererseits von dem Zustand der Umgebung (Zustand der Straße - trocken, nass oder vereist) ab.

In einem Fahrzeug sind die zwei Eigenschaften, Lenkwinkel und (positive oder negative) Beschleunigung-wir bezeichen diese beiden Eigenschaften als *essentielle Eigenschaften einer Trajektorie -* von besonderer Bedeutung, da der Lenkwinkel und die Beschleunigung vom Echtzeitcomputersystem bestimmt werden. Die Datenverarbeitungskomponente 132 muss daher die Grenzwerte dieser essentiellen Eigenschaften für den kommenden Wegpunkt jeder sicheren Trajektorie bereitstellen.

In bestimmten Verkehrssituationen können mehrere sich ausschließende Trajektorien sicher sein. Zum Beispiel kann ein Fels in der Mitte einer breiten Straße entweder links oder rechts umfahren werden, oder das Fahrzeug kann unmittelbar vor dem Felsen angehalten werden. Da die Datenverarbeitungskomponente 132 keine Informationen darüber hat, welche dieser Trajektorien von der Datenverarbeitungskomponente 121 geplant wurde, muss die Datenverarbeitungskomponente 132 die essentiellen Eigenschaften aller zu einem Zeitpunkt in Frage kommenden sicheren Trajektorien berechnen.

Eine sichere Umhüllung ist die Zusammenstellung aller Grenzwerte für die essentiellen Eigenschaften aller sicheren Trajektorien. Eine geplante Trajektorie ist sicher, wenn die essentiellen Eigenschaften der Trajektorie innerhalb der Intervalle liegen, die von der sicheren Umhüllung vorgegeben werden.

Beim autonomen Fahren errechnet eine Datenverarbeitungskomponente, in dem konkreten Beispiel die Datenverarbeitungskomponente 121 eine geplante Trajektorie des Fahrzeugs unter Berücksichtigung des Wunsches des Fahrers und der gegebenen, von den Sensoren erfassten Umweltbedingungen.

Eine Datenverarbeitungskomponente, hier die Datenverarbeitungskomponente 132, errechnet eine sichere Umhüllung (envelope) aller sicheren Trajektorien und überprüft, ob die Umgebung des Fahrzeugs der Spezifikation des Operational Design Domains (ODD) entspricht. Eine ODD Spezifikation gibt an, unter welchen spezifizierten Bedingungen die autonome Führung eines Fahrzeugs möglich ist. Z.B. kann spezifiziert sein, dass Schneefall im ODD nicht vorgesehen ist, da anhaftender Schnee einen Sensor vorübergehend ausfallen lässt. Die Datenverarbeitungskomponente 132, die eine sichere Umhüllung aller sicheren Trajektorien ermittelt, muss mindestens nach den Richtlinien von ASIL B entwickelt sein.

Eine andere Datenverarbeitungskomponente, hier die Datenverarbeitungskomponente 143, errechnet eine Notfalltrajektorie, die das Fahrzeug nach Erkennen eines Fehlers in einen sicheren Zustand führt. Die Notfalltrajektorie muss das Fahrzeug unter allen Umständen, auch außerhalb des spezifizierten ODD, in einen sicheren Zustand führen. Die Datenverarbeitungskomponente 143 muss mindestens nach den Richtlinien von ASIL B entwickelt werden, wobei es ausreichend, wenn sie nach ASIL B entwickelt ist. Das Service der Datenverarbeitungskomponente 143 wird nur benötigt, wenn ein Fehler in der Datenverarbeitungskomponente 121 oder ein Fehler in der Datenverarbeitungskomponente 132 vorliegt.

Die sichere Entscheidungskomponente 150-einfache Software, entwickelt nach ASIL D auf fehlertoleranter Hardware-entscheidet, ob die von Datenverarbeitungskomponente 121 errechnete Trajektorie innerhalb der sicheren Umhüllung, die von Datenverarbeitungskomponente 132 bereitgestellt wurde, liegt. Ist dies der Fall, so wird die von der Datenverarbeitungskomponente 121 errechnete Trajektorie einem Aktuator 170 zur Ausführung übergeben. Liegt die errechnete Trajektorie nicht innerhalb der sicheren Umhüllung, so wird die Entscheidungskomponente 150 versuchen, das Fahrzeug unter Verwendung der von der Datenverarbeitungskomponente 143 errechneten Notfalltrajektorie in einen sicheren Zustand zu führen.

Alternativ, z.B. im Falle einer Robotersteuerung, kann die Entscheidungskomponente 150 den Bewegungsablauf anhalten, falls die von der Datenverarbeitungskomponente 121 errechnete Trajektorie nicht innerhalb der sicheren Umhüllung, die von der Datenverarbeitungskomponente 132 errechnet wurde, liegt. In diesem Fall ist die Datenverarbeitungskomponente 143 nicht erforderlich.

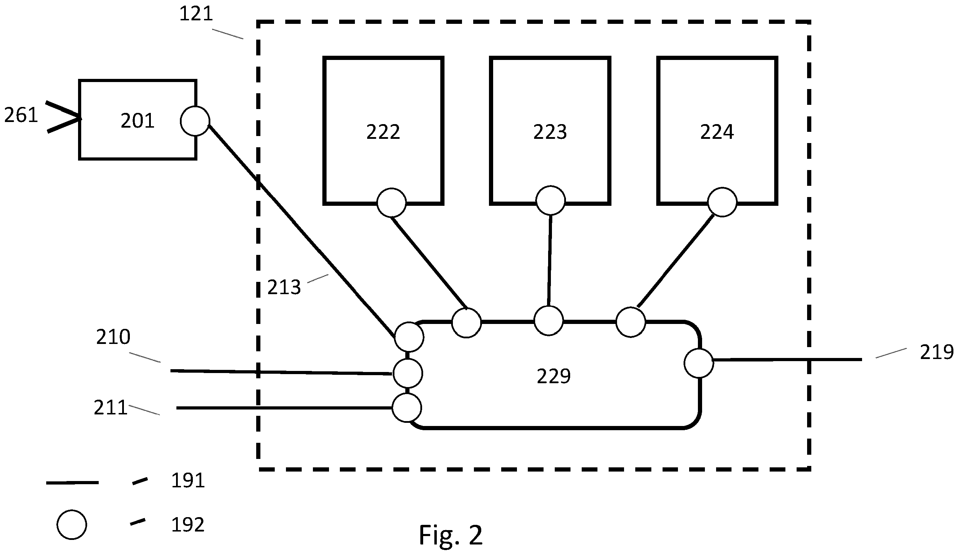

Entsprechend **Figur 2** kann eine Datenverarbeitungskomponente, z.B. die Datenverarbeitungskomponente 121, hierarchisch aufgebaut sein und aus (unterlagerten) Verarbeitungskomponenten 222, 223, 224, den sogenannten Verarbeitungs-Unterkomponenten ("VUK") (oder mehreren VUKs) bestehen oder diese umfassen, die mittels eines unterlagerten zeitgesteuerten Kommunikationssystems (im Folgenden "Kommunikations-Untersystem") 229 Daten austauschen. Da die Datenverarbeitungskomponente 121 als Ganzes unsicher ist, reicht ein einfaches Kommunikations-Untersystem 229 aus, um die Daten zwischen den VUKs 222, 223, 224 zu übertragen. Es jedoch wichtig, dass das zeitgesteuerten Kommunikations-Untersystem 229 über zwei getrennte Kommunikationskontroller 192 an die beiden unabhängigen Kommunikationssysteme 110, 111 **(****Figur 1****)** des Echtzeitcomputersystem 100 angeschlossen ist, um einen Fehler eines dieser beiden Kommunikationssysteme 110, 111 zu maskieren. Die Leitung 210 in **Figur 2** entspricht dabei der Leitung 191 aus **Figur 1****,** welche die Komponente 121 mit dem Kommunikationssystem 110 verbindet, die Leitung 211 in **Figur 2** entspricht der Leitung 191 aus **Figur 1****,** welche die Komponente 121 mit dem Kommunikationssystem 111 verbindet

Über einen weiteren Kommunikationskontroller 192 ist das Kommunikations-Untersystem der Datenverarbeitungskomponente 121 mit der Entscheidungskomponente 150 (siehe **Figur 1****)** verbunden. Die Leitung 219 in **Figur 2** entspricht der Leitung 191 aus **Figur 1****,** welche die Komponente 121 mit der Entscheidungskomponente 150 verbindet.

Ebenso können die Datenverarbeitungskomponente 132 und/oder die Datenverarbeitungskomponente 143 hierarchisch aufgebaut sein.

Entsprechend **Figur 2** kann eine Datenverarbeitungskomponente weiters über einen oder mehrere eigene Sensoren verfügen, der bzw. die nur dieser einen Datenverarbeitungskomponente zugeordnet ist/sind, z.B. einen Sensor 261, der über eine Sensorkomponente 201 an das zeitgesteuerte Kommunikations-Untersystem 229 der Datenverarbeitungskomponente 121 angekoppelt ist.

Z.B. kann es sich bei dem Sensor 261 um eine (zusätzliche) Kamera handeln, welche die Funktionalität der entsprechenden Datenverarbeitungskomponente 121 verbessert oder eine Minimalfunktion ermöglicht, etwa wenn beide Kommunikationssysteme 110, 111 ausgefallen sind.

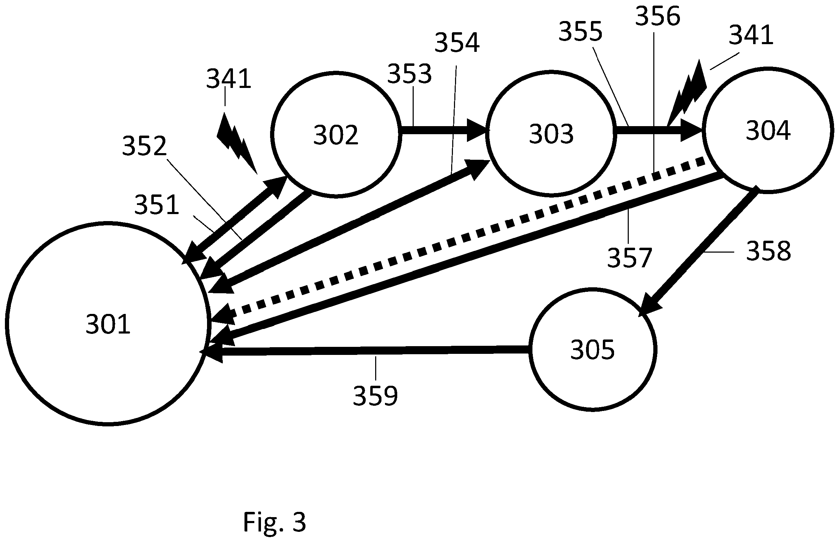

**Figur 3** zeigt ein Zustandsübergangsdiagramm beim autonomen Führen eines Fahrzeugs.

In **Figur 3** werden dabei folgende Zustände eingeführt:
- Zustand 301: das Fahrzeug befindet sich in einem sicheren Zustand, in welchem der Fahrer die Kontrolle über das Fahrzeug ausüben kann.
- Zustand 302: das Echtzeitcomputersystem wird vom Fahrer überwacht.
- Zustand 303: das Echtzeitcomputersystem führt das Fahrzeug autonom.
- Zustand 304: das autonome Echtzeitcomputersystem ist fehlerhaft.
- Zustand 305: das autonome Echtzeitcomputersystem führt ein Minimum Risk Manöver (MRM) aus, um das Fahrzeug in einen sicheren Zustand 305 zu führen. Der Zustand 304 bedeutet den Fehlzustand, während dem das MRM ausgeführt wird. Zustand 304 beginnt mit dem Auftreten des Fehlers und endet mit dem sicheren Zustand 305. Im Zustand 305 steht das Fahrzeug z.B. am Straßenrand. Der Fahrer kann während der Ausführung des MRM 305 die Kontrolle übernehmen oder auch nicht. Er kann auch später, nach erfolgreicher Beendigung des MRM im Zustand 305 die Kontrolle nach Zustand 301 übernehmen.

Es gibt also zwei sichere Zustände, einen Zustand 305 ohne Kontrolle des Fahrers (der Fahrer kann aber die Kontrolle übernehmen) und einen zweiten Zustand 301, wo der Fahrer (ständig) die Kontrolle hat.

Ein Fehler 341 tritt auf, wenn ein Fehler im Fahrzeug aufgetreten ist oder wenn die Umgebung des Fahrzeugs nicht mehr dem vorgesehenen Operational Design Domain (ODD) entspricht.

Ein Zustandsübergang wird durch ein Ereignis ausgelöst. In **Figur 3** sind folgende Zustandsübergänge eingeführt:
- Ereignis 351: Der Fahrer schaltet das Echtzeitcomputersystem vom sicheren Zustand 301 in den überwachten Betrieb 302 oder der Fahrer schaltet das Echtzeitcomputersystem vom überwachten Betrieb 302 in den sicheren Zustand 301.
- Ereignis 352: Ein Fehler 341 wir durch die Entscheidungskomponente 150 erkannt, da die von der Datenverarbeitungskomponente 121 errechnete Trajektorie nicht in der von der Datenverarbeitungskomponente 132 errechneten sicheren Umhüllung liegt oder weil die Datenverarbeitungskomponente 132 eine ODD-Verletzung erkannt hat. Das Echtzeitcomputersystem schaltet vom überwachten Betrieb 302 in den sicheren Zustand 301, in dem das Fahrzeug vom Fahrer kontrolliert wird.
- Ereignis 353: Der Fahrer schaltet das Echtzeitcomputersystem vom überwachten Betrieb 302 auf autonomen Betrieb 303.
- Ereignis 354: Der Fahrer schaltet das Echtzeitcomputersystem vom sicheren Zustand 301 auf autonomen Betrieb 303 oder der Fahrer schaltet vom autonomen Betrieb 303 auf den sicheren Zustand 301.
- Ereignis 355: Ein Fehler 341 wird durch die Entscheidungskomponente 150 erkannt, da die von der Datenverarbeitungskomponente 121 errechnete Trajektorie nicht in der von der Datenverarbeitungskomponente 132 errechneten sicheren Umhüllung liegt oder weil die Datenverarbeitungskomponente 132 eine ODD-Verletzung erkannt hat. Das Echtzeitcomputersystem schaltet vom autonomen Betrieb 303 in den Fehlzustand 304.
- Ereignis 356: Das Echtzeitcomputersystem informiert den Fahrer über den eingetretenen Fehlzustand 304.
- Ereignis 357: Der Fahrer übernimmt die Kontrolle und führt das Echtzeitcomputersystem vom Fehlzustand 304 in den sicheren Zustand 301.
- Ereignis 358: Das Echtzeitcomputersystem schaltet ein Minimum Risk Manöver (MRM) ein und bringt die Notfalltrajektorie, die von der Datenverarbeitungskomponente 143 ermittelt wurde, zur Anwendung, um das Fahrzeug in den sicheren Zustand 305 zu bringen.
- Ereignis 359: Der Fahrer übernimmt die Kontrolle Fahrzeugs aus dem Zustand 305.

Durch die Trennung der Funktionen der Berechnung einer Trajektorie durch die unsichere Datenverarbeitungskomponente 121, der Überprüfung der Sicherheit der berechneten Trajektorie durch die unsichere Datenverarbeitungskomponente 121, der Berechnung einer Notfalltrajektorie durch die unsichere Datenverarbeitungskomponente 143 und der Entscheidungsfindung, ob ein Fehler vorliegt, durch die einfache Entscheidungskomponente 150, wird das Echtzeitcomputersystem wesentlich vereinfacht [Kop19].

Die vorliegende Offenbarung stellt eine sichere Lösung der Automatisierung eines Fahrzeugs oder einer Maschine vor und ist deshalb von großer ökonomischer Bedeutung.

Insbesondere wird es durch die Erfindung möglich, dass alle Datenverarbeitungskomponenten mit Sensordaten von denselben Sensoren versorgt werden können, also nicht jede Datenverarbeitungskomponente eigene Sensoren benötigt, wodurch die Kosten für bei einem erfindungsgemäßen Echtzeitcomputersystem deutlich reduziert werden können. Gleichzeitig ist aber die sichere Automatisierung einer Maschine oder eines Fahrzeuges sichergestellt.

Im Folgenden ist eine mögliche technische Realisierung eines Zeitservers (oben mit "115" bezeichnet), wie er bei der vorliegenden Erfindung zum Einsatz kommen kann, gezeigt.

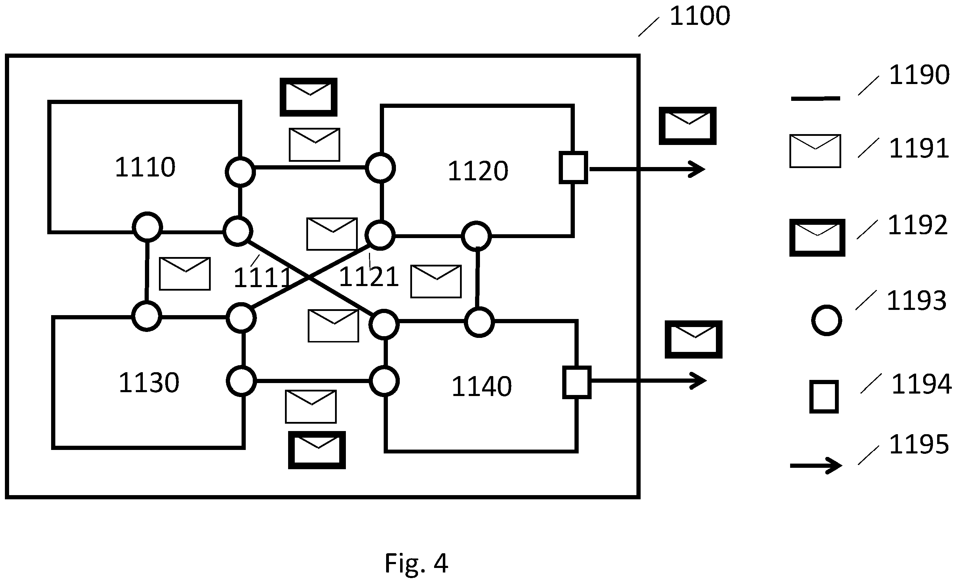

Es werden dabei die folgenden Begriffsdefinitionen verwendet, die grundsätzlich im Umfang der gesamten vorliegenden Offenbarung gelten, wobei allerdings einzelne Begriffsdefinitionen für den Fall, dass sie mit den vorstehenden Ausführungen in Konflikt stehen, nur im Zusammenhang mit den Ausführungen zu den **Figuren 4 - 8** gelten:
**bi-direktionaler Kommunikationskanal:** Ein Kommunikationskanal, auf dem Nachrichten in beide Richtungen übertragen werden können.

**Computer eines Echtzeitsystems:** Einer der Vielzahl von Computern des verteilten Echtzeitcomputersystem, der vom Zeitserver Synchronisationsnachrichten empfängt. Synonym zu *externer Empfänger.*

**Empfänger einer Nachricht (Synchronisationsnachricht):** Komponente des Zeitservers, welche die Nachricht von einer anderen Komponente dieses Zeitservers erhält.

**externe Synchronisationsnachricht:** Eine Synchronisationsnachricht zur Synchronisation der Uhren außerhalb eines Zeitservers. Eine externe Synchronisationsnachricht muss erfindungsgemäß *fail-silent sein,* d.h. sie ist entweder richtig oder wird als unrichtig erkannt.

Die Fehlererkennung einer im Wertebereich unrichtigen Synchronisationsnachricht kann durch die Überprüfung einer elektronischen Unterschrift, die in der externen Synchronisationsnachricht enthalten ist, erfolgen.

**externer Empfänger:** jeder Computer des verteilten Echtzeitcomputersystems, dessen Uhr durch externe Synchronisationsnachrichten, die periodisch vom Zeitserver gesendet werden, mit der globalen Zeit synchronisiert wird.

**externer Empfangszeitpunkt:** Der *a priori* festgelegte Zeitpunkt, zu dem eine korrekte/richtige externe Synchronisationsnachricht beim externen Empfänger eintrifft und der in einer Payload der externen Synchronisationsnachricht enthalten ist.

**externer Synchronisationszeitpunkt:** ein periodisch wiederkehrender Zeitpunkt, der im Rahmen des Systementwurfs festgelegt wird und zu dem eine externe Synchronisationsnachricht von einer Komponente des Zeitservers zu einer anderen internen Komponente des Zeitservers gesendet wird. Die externe Synchronisationsnachricht wird genau nur dieser einen internen Komponente zugesendet, wobei letztere außerdem von keinen anderen internen Komponenten des Zeitservers externe Synchronisationsnachrichten erhält. Die (interne) Übertragung der externen Synchronisationsnachrichten zwischen zwei Komponenten des Zeitservers erfolgt *direkt* über eine Kommunikationsleitung, welche die beiden Komponenten direkt, ohne den Umweg über andere Komponenten verbindet.

**Fehlerhypothese:** Die Annahmen über die zu tolerierenden Fehler in einem fehlertoleranten Computersystem [Kop11, S. 154].

**fehlertoleranter Uhrensynchronisations-Algorithmus:** Ein Algorithmus zur fehlertoleranten Synchronisation der Uhren in einem Verteilten Computersystem [Kop11, S.69].

**festgehaltener Empfangszeitpunkt:** Der Zeitpunkt des Empfangs einer externen Synchronisationsnachricht, gemessen mit der Uhr des externen Empfängers. Die Genauigkeit der Messung des festgehaltene Empfangszeitpunkt kann durch einen Hardwaremechanismus verbessert werden.

**Globale Zeit:** Die vom Zeitserver übermittelte Zeit, deren entsprechende Ticks bei allen externen Empfängern innerhalb einer definierten *Präzision* liegen (siehe [Kop11, S. 55] zum Begriff der Präzision).

**GPS Zeit:** Ein weltweites, mit der SI Sekunde synchronisiertes Zeitsignal, das vom GPS System ausgestrahlt wird und von einem GPS Empfänger empfangen werden kann [Dan97].

**GPS Empfänger (Receiver):** Eine elektronische Baueinheit, die Satellitensignale von GPS Satelliten empfängt und die ein Zeitsignal (ausgedrückt in SI Sekunden) an den Zeitserver, insbesondere an die an den GPS Empfänger angeschlossenen Komponenten des Zeitservers übergibt [Dan97].

**gültige externe Synchronisationsnachricht:** Eine externe Synchronisationsnachricht ist *gültig,* wenn der Inhalt der Nachricht mit der in der Nachricht enthaltenen Signatur übereinstimmt.

**interne Synchronisationsnachricht:** Eine Synchronisationsnachricht zur internen Synchronisation der Tick-Zähler der Komponenten innerhalb eines Zeitservers. Interne Synchronisationsnachrichten werden zwischen den internen Komponenten eines Zeitservers übertragen.

**interner Synchronisationszeitpunkt:** ein periodisch wiederkehrender Zeitpunkt, der im Rahmen des Systementwurfs festgelegt wird und zu dem eine interne Synchronisationsnachricht gesendet wird.

**Kommunikationskontroller:** die Baueinheit innerhalb eines Computers, welche die Verbindung zwischen einem externen Kommunikationskanal und dem Speicher des Computers herstellt und die die Abwicklung des Kommunikationsprotokolls vornimmt.

**Komponente:** Ein Computer mit einem Oszillator, einen Tick-Zähler und der notwendigen Software innerhalbe des Zeitservers.

**SI-Sekunde:** Internationaler Standard der Sekunde [Tay01].

**Start-up Nachricht:** Eine Nachricht innerhalb des Zeitservers zur internen Uhrensynchronisation, die in der Start-up Phase gesendet wird.

**Start-up Phase:** Ein Zeitintervall unmittelbar nach dem *Power-up* der internen Komponenten des Zeitservers. Während der Start-up Phase werden die Tick-Zähler der Komponenten mittels eines zentralen Master Algorithmus [Kop11, S.68] synchronisiert.

**unabhängige Kommunikationskontroller des Zeitservers:** zwei Kommunikationskontroller des Zeitservers sind unabhängig, wenn sie auf bzw. in unterschiedlichen internen Komponenten angeordnet sind.

**Zeitserver:** Ein Apparat bzw. eine Vorrichtung, umfassend mindestens vier Komponenten zum Aufbau einer fehlertoleranten globalen Zeit.

**Figur 4** zeigt einen Zeitserver **1100** mit vier *Komponenten* **1110, 1120, 1130, 1140,** einer ersten Komponente **1110,** einer zweiten Komponenten **1120,** einer dritten Komponente **1130** und einer vierten Komponenten **1140.**

Die erste Komponente **1100** ist mit jeder der anderen drei Komponenten, d.h. mit der zweiten, dritten und vierten Komponente **1120, 1130, 1140,** die zweite Komponente **1120** mit jeder der anderen drei Komponenten (erste, dritte und vierte) **1100, 1130, 1140,** die dritte Komponente **1130** mit jeder der anderen drei Komponenten (erste, zweite und vierte) **1100, 1120,1140** und die vierte Komponente **1140** mit jeder der anderen drei Komponenten (erste, zweite dritte) **1100, 1120, 1130** über je einen *bi-direktionalen Kommunikationskanal* **1190, 1111, 1121** zur Übertragung von Nachrichten mittels *interner Kommunikationskontroller* **1193** der jeweiligen Komponenten verbunden.

In **Figur 4** wird zwischen zwei Arten von Nachrichten unterschieden, *internen Synchronisationsnachrichten* **1191** und *externen Synchronisationsnachrichten* **1192.** Die externen Synchronisationsnachrichten **1192** sind vorzugsweise signiert.

In dem Beispiel gemäß **Figur 4** verfügt jede Komponente über drei interne Kommunikationskontroller **1193.** Die drei internen Kommunikationskontroller **1193** einer Komponente sind in der Lage, *interne Synchronisationsnachrichten* **1191** in beiden Richtungen (bi-direktional) zu transportieren.

Weiters verfügen in dem gezeigten Beispiel die zweite und die vierte Komponente **1120,1140** jeweils über einen sogenannten "externen" Kommunikationskontroller **1194.** Diese zwei externen Kommunikationskontroller **1194** können die *externen Synchronisationsnachrichten* **1192** vorzugsweise nur in einer Richtung (uni-direktional) transportieren-in der Richtung vom Zeitserver zu den *externen Empfängern* des verteilten Echtzeitcomputersystems.

Über die *internen Kommunikationskanäle* **1190** zwischen den Komponenten **1100** und **1120,** sowie den Komponenten **1130** und **1140** können sowohl die *internen Synchronisationsnachrichten **1191*** wie auch die *externe Synchronisationsnachrichten **1192*** übertragen werden.

Ein *externer Kommunikationskontroller* **1194** kann die *externen Synchronisationsnachrichten* **1192** auch über einen drahtlosen Funkkanal an seine externen Empfänger senden. Jedoch muss gewährleistet sein, dass die beiden Kommunikationskontroller **1194** die beiden externen Synchronisationsnachrichten **1192** *gleichzeitig,* z.B. auf unterschiedlichen Frequenzbändern, übertragen.

Jede der vier Komponenten **1100,1120,1130,1140** der **Figur 4** verfügt über einen *internen Computer* mit einem *Oszillator* und einem *lokalen Tick-Zähler,* sowie einer Software, die einen Uhrensynchronisationsalgorithmus ausführt. Nach dem Einschalten einer Komponente, dem *Power-up,* wird eine Initialisierungsroutine angestoßen, die den lokalen Tick-Zähler jeder Komponente mit dem Wert Null initialisiert. Der Wert des lokalen Tick-Zählers wird pro Periode des Oszillators um 1 erhöht.

Nach dem *Power-up* beginnt die *Start-up* Phase des Zeitservers. Während der Start-up Phase übernimmt eine ausgezeichnete Komponente, z.B. die Komponente **1100,** die Rolle eines zentralen *Time-Masters.* Der *Time Master* sendet eine *interne Start-up Nachricht* **1191** mit dem Inhalt ihres lokalen *Tick-Zählers* zum Zeitpunkt des Sendens *gleichzeitig* über ihre drei internen Kommunikationskontroller **1193** an die anderen drei Komponenten **1120, 1130, 1140.** Jeder (komponenten-interne) Empfänger **1120, 1130, 1140** der Startup Nachricht korrigiert den in der Startup Nachricht enthaltenen Tick-Zähler um eine *a priori* bekannte Transportverzögerung der Start-up Nachricht und schreibt diesen korrigierten Wert in seinen Tick-Zähler. Zu diesem Zeitpunkt sind nun die lokalen Tick-Zähler aller Uhren synchronisiert. Der Zeitpunkt des Eintreffens einer einlaufenden Nachricht in einer Komponente kann durch den Einsatz von unterstützenden Hardwaremechanismen genau festgehalten werden.

Im Rahmen eines Systementwurfs - *a priori -* werden periodische *interne Synchronisationszeitpunkte* festgelegt, zu denen die lokalen Tick-Zähler der Komponenten korrigiert werden, um die im Zeitintervall zwischen zwei internen Synchronisationszeitpunkten aufgetretenen Abweichungen ihrer Uhren zu korrigieren.

Jede der vier Komponenten sendet zu jedem *internen Synchronisationszeitpunkt* eine *interne Synchronisationsnachricht* **1191** gleichzeitig über ihre drei internen Kommunikationskontroller **1193** an alle anderen Komponenten des Zeitservers. Eine *interne Synchronisationsnachricht* **1191** enthält den Stand des lokalen Tick-Zählers des jeweiligen Senders zum Zeitpunkt des Sendens in der Payload.

Jeder Empfänger einer *internen Synchronisationsnachricht* **1191** hält den Stand seines lokalen Tick-Zählers zum Empfangszeitpunkt der *internen Synchronisationsnachricht* **1191** fest (vorzugsweise durch Hardwaremechanismen im Kommunikationskontroller **1193).**

Entsprechend **Figur 4** enthält jede Komponente drei interne Synchronisationsnachrichten **1191** über die drei internen Kommunikationskontroller **1193.** Z.B. empfängt die erste Komponente **1100** je eine interne Synchronisationsnachricht von jeder der Komponenten **1120,1130,1140.**

Jede Komponente ermittelt die Zeitdifferenzen zwischen den in den *internen Synchronisationsnachrichten* enthaltenen Sendezeitpunkten und den festgehaltenen Empfangszeitpunkten, korrigiert um die *a priori* bekannte Verzögerungen der *internen Synchronisationsnachrichten,* und übergibt diese Zeitdifferenzen einem fehlertoleranten Uhrensynchronisations-Algorithmus. In **Figur 4** stehen somit dem UhrensynchronisationsAlgorithmus in der ersten Komponente **1100** vier Zeitdifferenzen zur Verfügung, drei von den Nachrichten der Komponente **1120,1130** und **1140,** sowie die Zeitdifferenz Null vom Tick-Zähler der Komponente **1100.** (Die Komponente **1100** nimmt dabei an, dass sie *richtig* liegt.)

Im Detail wird zu *a priori* festgelegten periodischen, *internen Synchronisationszeitpunkten* jede der vier Komponenten **1110, 1120, 1130, 1140** eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten sendet, wobei jeder Empfänger einer *internen Synchronisationsnachricht* den Stand seines lokalen Tick-Zählers zum Empfangszeitpunkt der *internen Synchronisationsnachricht* festhält, und die ZeitDifferenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* ermittelt, und wobei jeder *interne* Computer einer Komponente aus diesen Zeitdifferenzen entsprechend einem fehlertoleranten Uhrensynchronisations-Algorithmus einen Korrekturterm für den in seiner Komponente enthaltenen Tick-Zähler ermittelt und den Stand des lokalen Tick-Zählers um diesen Korrekturterm korrigiert, und wobei zwei der vier Komponenten, z.B. die erste Komponente **1110** und die dritte Komponente **1130,** je eine *externe Synchronisationsnachricht* **1192,** die einen *a priori* festgelegten *externen Empfangszeitpunkt* dieser *externen Synchronisationsnachricht* enthält, bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal 1190 direkt an eine der anderen Komponenten **1120, 1130,** aber nicht an dieselbe der beiden anderen Komponenten, senden, z.B. die erste Komponente **1110** an die zweite Komponente **1120** und die dritte Komponente **1130** an die vierte Komponenten **1140.**

Jede der Komponenten **1120, 1140** des Zeitservers **1100,** an welche eine externe Synchronisationsnachricht gesendet wurde, überprüft, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist,
- und falls dies nicht der Fall ist, die *externe Synchronisationsnachricht* verwirft,
- und falls dies der Fall ist, die externe Synchronisationsnachricht über einen externen Kommunikationskontroller **1194** der Komponente **1120, 1140** an einen externen Empfänger zu einem, insbesondere a priori festgelegten Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterleitet,

und wobei jeder externe Empfänger den Zeitpunkt des Empfangs der ersten eintreffenden *externen Synchronisationsnachricht* mit seiner lokalen Uhr festhält und anschließend den Stand seiner lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt korrigiert.

Fehlertolerante Uhrensynchronisations-Algorithmen sind in der Fachliteratur ausführlich beschrieben [z.B. Kop11, S. 69]. Ein fehlertoleranter Uhrensynchronisations-Algorithmus wird in *jeder Komponente* ausgeführt und ermittelt aus der Gesamtheit der ermittelten Zeitdifferenzen aller Uhren einen Korrekturwert für die eigene Uhr. Der Tick-Zähler der eigenen Uhr wird mit diesem Korrekturwert korrigiert. Der Begriff der *Präzision* eines Ensembles beschreibt die Genauigkeit der internen Synchronisation [Kop11, S. 55].

Im Rahmen des Systementwurfs werden periodische *externe Synchronisationszeitpunkte,* und entsprechende *Empfangszeitpunkte* einer *externen Synchronisationsnachricht* **1192** bei einem externen Empfänger festgelegt. Eine externe Synchronisationsnachricht **1192** enthält in ihrer Payload den geplanten Empfangszeitpunkt dieser Nachricht bei dem externen Empfänger und vorzugsweise eine *elektronische Unterschrift (Signatur) des Senders,* d.h. des Erstellers der externen Synchronisationsnachrichten **1192** (im vorliegenden Fall sind das die Komponenten **1100, 1130).** Es wird angenommen, dass eine *elektronische Unterschrift des Senders* nicht gefälscht werden kann.

Eine externe Synchronisationsnachricht **1192** kann in ihrer Payload auch Angaben über den inneren Zustand einer Komponente enthalten.

Die periodischen *Synchronisationszeitpunkte* der *externen Synchronisationsnachrichten* sollen vorzugsweise so gewählt werden, dass der zeitliche Abstand zwischen zwei Synchronisationsnachrichten einer (negativen) Potenz der *SI Sekunde* entspricht. Diese zeitliche Differenz kann von der GPS Zeit, die als Basis der Zeitzählung die SI Sekunde verwendet, abgeleitet werden. Wenn die *externen Synchronisationsnachrichten* mit der GPS Zeit synchronisiert sind, so ist die Zeitbasis des verteilten Computersystems weltweit mit allen anderen Computern, die auf der GPS Zeit aufbauen, synchronisiert

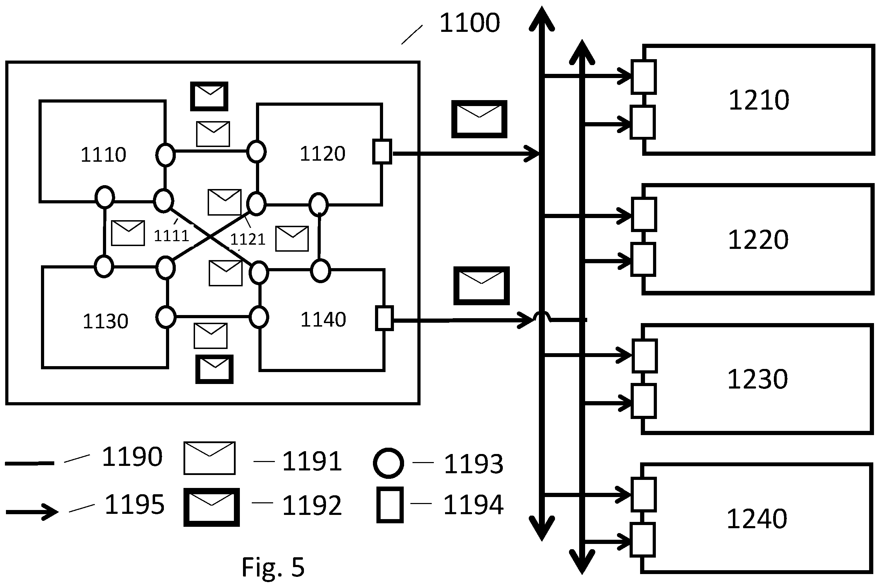

**Figur 5** zeigt ein Echtzeitcomputersystems mit vier Computern **1210, 1220, 1230, 1240,** die mit einem fehlertoleranten Zeitserver gemäß **Figur 4** verbunden sind. Die erste Komponente **1100** des Zeitservers **1100** gemäß **Figur 4** sendet eine für die Computer **1210, 1220, 1230, 1240** bestimmte *externe Synchronisationsnachricht* **1192** über ihre internen Kommunikationskontroller **1193** an den internen Kommunikationskontroller **1193** der zweiten Komponente **1120.** Die zweite Komponente **1120** überprüft die Richtigkeit des in der *externen Synchronisationsnachricht* enthaltenen externen Empfangszeitpunkts. Dieser externe Empfangszeitpunkt ist gültig, wenn der Stand der Uhr der Komponente **1120** zum Zeitpunkt des Empfangs der *externen Synchronisationsnachricht* innerhalb eines a *priori festgelegten Intervalls vor dem* externen Empfangszeitpunkt, welcher in der *externen Synchronisationsnachricht* enthaltenen ist, liegt. Ist die *externe Synchronisationsnachricht* nicht gültig, so wird sie verworfen. Anderenfalls wird die *externe Synchronisationsnachricht* von der zweiten Komponente **1120** über ihren unidirektionalen externen Kommunikationskontroller **1194** zu den Computern **1210, 1220, 1230, 1240** zu einem Zeitpunkt gesendet, der sicher stellt, dass die Nachricht zu dem in der *externen Synchronisationsnachricht* enthaltenen Empfangszeitpunkt bei den Computern **1210, 1220, 1230, 1240** eintrifft. Die zweite Komponente **1120** kann den in der *externen Synchronisationsnachricht* enthaltenen externen Empfangszeitpunkt nicht ändern, da beispielsweise diese *externe Synchronisationsnachricht* von der ersten Komponente **1100** signiert ist.

Umgelegt auf das Beispiel aus **Figur 1** entspricht der Zeitserver 1100 dem Zeitserver 115 aus **Figur 1****.** Mittels der beiden Kommunikationskontroller 1193, 1194 ist der Zeitserver jeweils mit einem Echtzeitkommunikationssystem (110, 111 in **Figur 1****)** verbunden. Jedes der Echtzeitkommunikationssysteme 110, 111 ist mit den Komponenten 101, 102, 103, 121, 132, 143 aus **Figur 1** verbunden (diese entsprechen dem Computern 1210, 1220, 1230, 1240).

Die vierte Komponente **1140** führt das oben beschriebene Verfahren *gleichzeitig* in Bezug auf die zweite *externe Synchronisationsnachricht* **1192** durch und sendet diese zu den Computern **1210,1220,1230,1240** des Echtzeitcomputersystems.

Dabei erhält die vierte Komponente **1140** intern die externe Synchronisationsnachricht **1192** von der dritten Komponente **1130.**

Allgemein gilt vorzugsweise, dass jeweils zwei Komponenten (hier die zweite und die vierte Komponente) gleichzeitig eine externe Synchronisationsnachricht nach Außen senden. Jede dieser beiden Komponenten erhält dabei intern die externe Synchronisationsnachricht von einer anderen - und jeweils nur von dieser - Komponente, z.B. erhält die zweite Komponente diese von der ersten Komponente (und nur von dieser) und die vierte Komponente diese von der dritten Komponente (und nur von dieser). Vorzugsweise signiert jene Komponente, welche die externe Synchronisationsnachricht erzeugt und intern an die ihr zugeordnete Komponente versendet, diese externe Synchronisationsnachricht.

In der in **Figur 4** gezeigten Struktur wäre es auch denkbar, dass intern die erste Komponente die externe Synchronisationsnachricht (nur) an die vierte Komponente und die dritte Komponente die externe Synchronisationsnachricht (nur) an die zweite Komponente sendet.

Es ist für den Fachmann klar, dass auch vorgesehen sein könnte, dass natürlich auch andere Komponenten (z.B. erste und zweite Komponente) die externen Synchronisationsnachrichten paarweise nach Extern senden, und sie intern die externen Synchronisationsnachrichten von den beiden anderen Komponenten, z.B. von der dritten Komponente und von der vierten Komponente, erhalten.

Figur 5 zeigt vier externe Empfänger **1210, 1220, 1230, 1240** des verteilten Echtzeitcomputersystems, deren Uhren von dem fehlertoleranten Zeitserver **1100** mit der globalen Zeit versorgt werden. Jeder dieser vier externen Empfänger erhält innerhalb der *Präzision* um den in der *externen Synchronisationsnachricht* enthaltenen Empfangszeitpunkt zwei *externe* Synchronisationsnachrichten über die zwei unabhängigen externen Kommunikationskontroller **1194** von den entsprechenden Komponenten **1120,1140** des Zeitservers **1100.**

Eine bei einem externen Empfänger eintreffende *externen Synchronisationsnachricht* ist *gültig,* wenn der Inhalt der Nachricht mit einer in der Nachricht enthaltenen Signatur übereinstimmt.

Die Differenz zwischen dem von dem externen Empfänger festgehaltenen Zeitpunkt des Eintreffens der ersten *gültigen externen Synchronisationsnachricht* **1192** und dem in der *ersten gültigen externen Synchronisationsnachricht* **1192** *enthaltenen* Empfangszeitpunkt wird verwendet, um den Stand der Uhr des externen Empfängers auf die empfangene globale Zeit zu stellen. Die später eintreffende zweite *externen Synchronisationsnachricht* 1192 wird vom externen Empfänger verworfen, da sie möglicherweise von einem fehlerhaften Sender (z.B. von einer fehlerhaften Komponente 1120) unzulässig verzögert wurde.

Die Fehlerhypothese eines fehlertoleranten Systems gibt an, welche Art von Fehlern von dem System toleriert werden [Kop11, S. 145]. Im vorliegenden Fall wird angenommen, dass jede Komponente des Zeitservers eine *unabhängige Fault-Containment Unit* (FCU) bildet und jede FCU *beliebig* ausfallen kann, d.h. die Fehlerart einer FCU ist nicht eingeschränkt. Weiters wird in der Fehlerhypothese angenommen, dass während des Betriebs nur eine Komponente des Zeitservers fehlerhaft ist.

Wenn eine der vier Komponenten des Zeitservers **1100** fehlerhaft wird, so wird dieser Fehler durch die vorgeschlagene Systemarchitektur des Zeitservers maskiert. Wenn z.B. die Komponente **1100** der **Figur 4** fehlerhaft ist und zu einem falschen Zeitpunkt eine externe Synchronisationsnachricht **1192,** die für die externen Empfänger **1210, 1220, 1230, 1240** bestimmt ist, an die Komponente **1120** sendet, so wird die Komponente **1120** die Nachricht als fehlerhaft erkennen und verwerfen. Die zweite externe Synchronisationsnachricht **1192,** die für die externen Empfänger **1210, 1220, 1230, 1240** bestimmt ist, stammt von der dritten Komponente **1130** und wird von der vierten Komponente **1140** überprüft. Nachdem entsprechend der Fehlerhypothese nur eine Komponente-in diesem Fall die Komponente **1100** - fehlerhaft sein kann, wird die zweite Synchronisationsnachricht korrekt bei den externen Empfängern **1210, 1220, 1230, 1240** ankommen.

Wenn die überprüfende Komponente eine externe Synchronisationsnachricht **1192** aufgrund eines Fehlers verzögert, so wird diese externe Synchronisationsnachricht zeitlich nach der anderen gültigen externen Synchronisationsnachricht **1192** beim externen Empfänger ankommen und vom externen Empfänger verworfen. Wenn eine überprüfende Komponente den Inhalt einer externen Synchronisationsnachricht **1192** ändert, so wird die externe Synchronisationsnachricht **1192** *ungültig* und vom externen Empfänger verworfen.

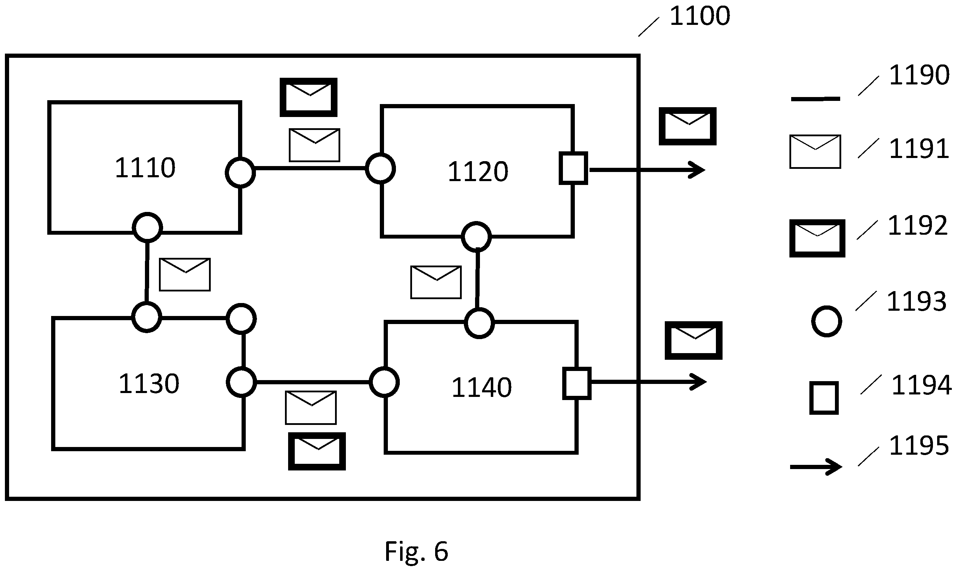

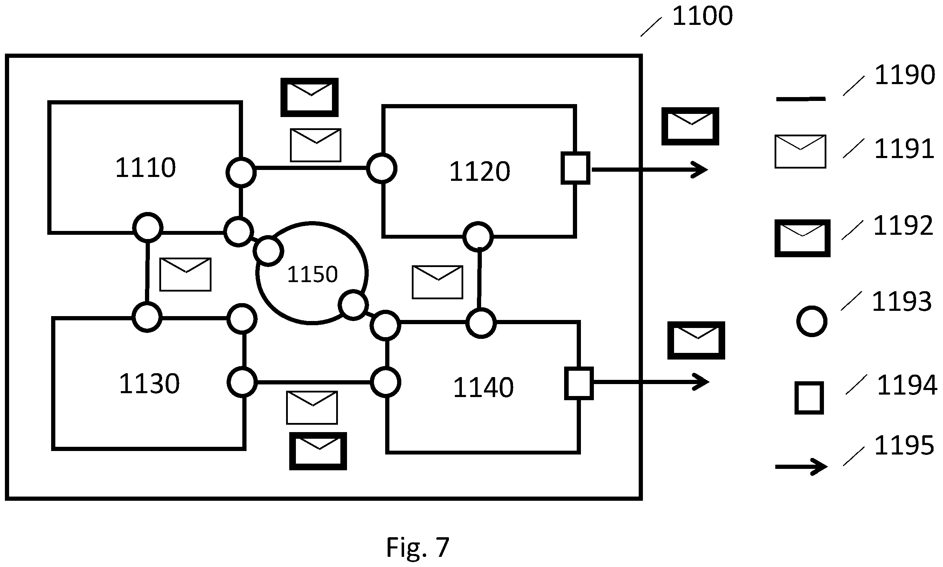

**Figur 6** zeigt einen Zeitserver **1100,** bei dem der Kommunikationskanal **1111** zwischen der ersten und der vierten Komponenten **1100, 1140** der **Figur 7** und der Kommunikationskanal **1121** zwischen der zweiten und der dritten Komponente **1120, 1130** der **Figur 7** fehlen. Durch das Weglassen dieser beiden Kommunikationskanäle können vier interne Kommunikationskontroller **1193** und zwei Signalleitungen eingespart werden. Der Preis, der diesen Einsparungen gegenübersteht, ist die Einführung einer zweistufigen Übertragung der *internen Synchronisationsnachrichten.* Zum Beispiel muss eine *interne Synchronisationsnachricht* von der ersten Komponente **1100** an die vierte Komponente **1140** in der ersten Stufe von der Komponente **1100** an die Komponente **1120** und in der zweiten Stufe von der Komponente **1120** an die Komponente **1140** gesendet werden. Die durch dieses zweistufige Übertragungsverfahren hervorgerufene zusätzliche zeitliche Verzögerung muss in der empfangenden Komponente **1140** korrigiert werden.

**Figur 7** zeigt einen Zeitserver **1100** mit einem GPS Empfänger **1150** zur Synchronisation der globalen Zeit mit der GPS Zeit. Das GPS Signal des Global Positioning Systems enthält ein weltweit synchronisiertes Zeitsignal mit einer Präzision von besser als 100 nsec. Mit diesem Signal kann die globale Zeit der externen Empfänger weltweit synchronisiert werden.

Es ist vorteilhaft, wenn die Komponenten des Zeitservers, die das Zeitsignal vom GPS Empfänger **1150** übernehmen, dieses Zeitsignal auf Plausibilität überprüfen. Z.B. kann die Dynamik der Feldstärke der eintreffenden GPS Signale überwacht werden, oder es kann eine sprunghafte Änderung der angebotenen Zeit festgestellt werden, um eine Intrusion zu erkennen.

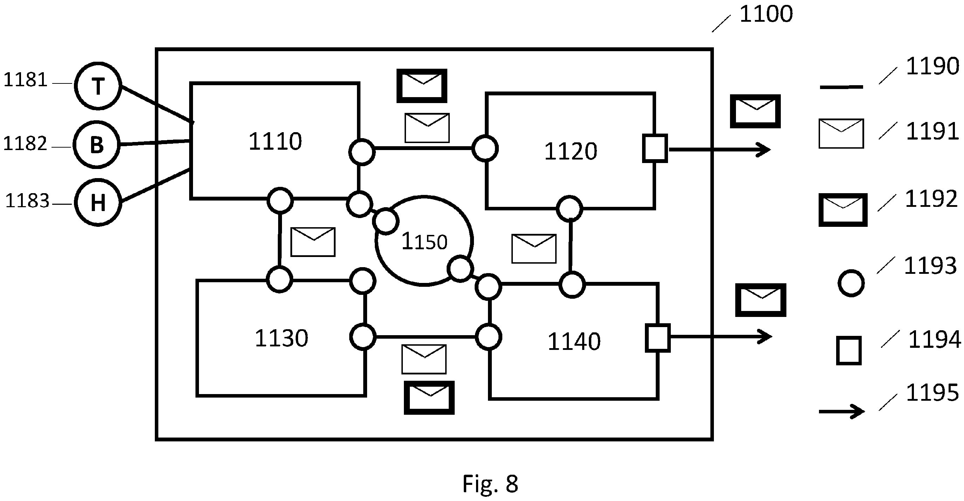

Der Zeitserver kann auch über Sensoren zur Messung der Umgebungsparameter verfügen, um die durch diese Umgebungsparameter verursachte Driftrate der Oszillatoren zu kompensieren. Beispiele für solche Umgebungsparameter sind Temperatur T, barometrischer Druck B, und Luftfeuchtigkeit H, die mit entsprechenden Sensoren **1181, 1182,1183** erfasst werden können, wie dies beispielhaft in **Figur 8** (ausgehend von einem Zeitserver **1100** wie in **Figur 7** gezeigt) dargestellt ist.

Es versteht sich von selbst, dass die Implementierung solcher Sensoren auch bei Zeitservern wie in **Figur 4** **oder** **6** dargestellt vorgesehen sein kann.

Ebenso kann alternativ oder zusätzlich ein GPS Empfänger genauso bei einem Zeitserver wie in **Figur 4** **oder** **6** gezeigt implementiert sein.

Es kann vorgesehen sein, dass eine externe Synchronisationsnachricht **1192** ein weiteres Datenfeld enthält, in dem Daten über den internen Zustand des Zeitservers **1100** veröffentlicht werden, um einem externen Monitorsystem die Möglichkeit zu geben, anhand der externe Synchronisationsnachrichten **1192** die interne Funktion des Zeitservers zu überprüfen. Diese Daten können neben anderen die gemessenen Zeitdifferenzen, den errechnete Korrekturwert der globalen Zeit oder die Feldstärke des GPS Empfängers betreffen.

Allgemein, d.h. auch für alle Ausführungsformen der Erfindung, gilt mit Vorteil, dass der Zeitserver jeweils aus zwei Subsystemen aufgebaut ist, wobei jedes Subsystem jeweils eine Komponente **1100,1130,** welche externe Synchronisationsnachrichten erzeugt (und vorzugsweise signiert), sowie jeweils eine weitere Komponente **1120, 1140,** welche diese externe Synchronisationsnachricht, die von der anderen Komponente ihres Subsystems generiert wird, empfängt umfasst, wobei letztere Komponente jedes Subsystems die externe Synchronisationsnachricht an eine externen Empfänger sendet. Diese Systemstruktur hat den Vorteil, dass die Subsysteme an unterschiedlichen Orten angeordnet werden können. Der Ausfall eines Subsystems kann toleriert werden.

Vorzugsweise verfügt jedes Subsystem über einen eigenen GPS Empfänger und/oder über eine eigene Stromversorgung.

### Zitierte Literatur:

### ISO Standard ISO 26262 über funktionale Sicherheit

[Kop11] Kopetz, H. Real-Time Systems - Design Principles for Distributed Embedded Applications. Springer Verlag. 2011
[Kop19] Kopetz, H. Simplicity is Complex - Foundations of Cyber-physical System Design. Springer Verlag. 2019
[Pea80] Pease, M., R. Shostak, & L. Lamport, Reaching Agreement in the Presence of Faults. Journal of the ACM,. 27(2): p. 228-234. 1980.
[Dvo09] Dvorak, D.L. Editor. NASA Study on Flight Software Complexity. Final Report. Jet Propulsion Laboratory, Pasadena, Cal. USA. 2009.
[Dan97] Dana, P.H. Global Positioning System (GPS) Time Dissemination for Real-Time Applications. Real-Time Systems. Vol 12. No. 1., pp. 9-40. 1997.
[Tay01] Taylor, B. Ed. The International System of Units. NIST Special Publication 130. 2001 Edition. National Institute of Standards and Technology (NIST). US Department of Commerce. 2001.

## Patentansprüche

1. Echtzeitcomputersystem **(100),** insbesondere verteiltes Echtzeitcomputersystem, zur Steuerung einer technischen Vorrichtung, z.B. einer technischen Anlage oder einer Maschine, wie etwa einem Roboter oder einem Fahrzeug, insbesondere einem Kraftfahrzeug, wobei das Echtzeitcomputersystem
- Datenerfassungskomponenten (**101, 102,103)** umfasst, welche voneinander unabhängig sind, wobei die Datenerfassungskomponenten (**101, 102, 103**) zur Erfassung von Sensordaten eingerichtet sind,
- sowie Datenverarbeitungskomponenten **(121,132,143)** zur Verarbeitung der Sensordaten umfasst,
**dadurch gekennzeichnet, dass**
- Datenerfassungskomponenten **(101,102,103)** unsichere Komponenten sind,
- das Echtzeitcomputersystem **(100)** weiter einen Zeitserver **(115)** sowie ein erstes Kommunikationssystem **(110)** und ein zweites Kommunikationssystem **(111)** umfasst,
- wobei der Zeitserver **(115)** dazu eingerichtet ist, globale Zeitsignale periodisch über eine oder mehrere unidirektionale Kommunikationsleitungen **(194)** an das erste Kommunikationssystem **(110)** und über eine oder mehrere unidirektionale Kommunikationsleitungen **(195)** an das zweite Kommunikationssystem **(111)** zu senden,
- wobei die Kommunikationssysteme (**110, 111**) voneinander unabhängig sind,
- und wobei jede Datenerfassungskomponente (**101, 102, 103)** über mindestens zwei, vorzugsweise genau zwei Kommunikationskontroller **(192)** verfügt, wobei jede Datenerfassungskomponente (**101, 102, 103)** mit einem der zumindest zwei Kommunikationskontroller **(192)** über zumindest eine, vorzugsweise genau eine Kommunikationsleitung **(191)** an das erste Kommunikationssystem **(110)** und mit einem anderen der zumindest zwei Kommunikationskontroller **(192)** über zumindest eine, vorzugsweise genau eine Kommunikationsleitung **(191)** an das zweite Kommunikationssystem **(111)** angeschlossen ist, sodass jede Datenerfassungskomponente (**101, 102, 103)** seine Sensordaten an jedes der zumindest zwei Kommunikationssysteme **(110,111)** übertragen kann bzw. überträgt,
- und wobei jede Datenverarbeitungskomponente (**121, 132, 143**) über mindestens zwei, vorzugsweise genau zwei Kommunikationskontroller **(192)** verfügt, wobei jede Datenverarbeitungskomponente (**121, 132, 143)** mit einem der zumindest zwei Kommunikationskontroller **(192)** über zumindest eine, vorzugsweise genau eine Kommunikationsleitung **(191)** an das erste Kommunikationssystem **(110)** und mit einem anderen der zumindest zwei Kommunikationskontroller **(192)** über zumindest eine, vorzugsweise genau eine Kommunikationsleitung **(191)** an das zweite Kommunikationssystem **(111)** angeschlossen ist, sodass jedes Kommunikationssystem (**110, 111**) die von den Datenerfassungskomponenten **(101, 102, 103)** empfangenen Sensordaten an jede der Datenverarbeitungskomponenten (**121, 132, 143)** übertragen kann bzw. überträgt,
- sodass jede Datenverarbeitungskomponente **(121,132,143)** die empfangenen Sensordaten verarbeiten kann.

2. Echtzeitcomputersystem nach Anspruch 1, wobei der Zeitserver **(115)** fehlertolerant ist.

3. Echtzeitcomputersystem nach Anspruch 1 oder 2, wobei eine, insbesondere jede Datenverarbeitungskomponente **(121)** aus Verarbeitungs-Unterkomponenten, VUK, **(222, 223, 224**) besteht oder VUKs umfasst, die dazu eingerichtet sind, über ein nicht redundantes, unterlagertes Echtzeitkommunikationssystem, ein sogenanntes Echtzeit-Unterkommunikationssystem Echtzeitdaten auszutauschen, wobei das Echtzeit-Unterkommunikationssystem bzw. eine Nachrichtenverteilereinheit **(229)** des Echtzeit-Unterkommunikationssystems, welche die an die Datenverarbeitungskomponente **(121)** übertragenen Sensordaten übernimmt, über mindestens zwei Kommunikationskontroller **(192)** verfügt, wobei einer der zumindest zwei Kommunikationskontroller **(192)** dazu eingerichtet ist, die Sensordaten von dem ersten Kommunikationssystem **(110)** zu übernehmen und ein anderer Kommunikationskontroller **(192)** der zumindest zwei Kommunikationskontroller **(192)** dazu eingerichtet ist, die Sensordaten von dem zweiten Kommunikationssystem **(111)** zu übernehmen, und wobei das Echtzeit-Unterkommunikationssystem bzw. eine Nachrichtenverteilereinheit **(229)** des Echtzeit-Unterkommunikationssystems einen weiteren Kommunikationskontroller **(192)** umfasst, mit welchem sie mit einer Entscheidungskomponente **(150)** verbunden ist.

4. Echtzeitcomputersystem nach einem der Ansprüche 1 bis 3, wobei die zumindest zwei Kommunikationssysteme **(110,111)** des Echtzeitcomputersystems Echtzeitkommunikationssysteme, insbesondere zeitgesteuerte Echtzeitkommunikationssysteme sind.

5. Echtzeitcomputersystem nach einem der Ansprüche 1 bis 4, wobei das Echtzeitcomputersystem **(100)** oder die zumindest zwei unabhängigen Kommunikationssysteme (**110, 111)** dazu eingerichtet ist/sind, die Sensordaten an zumindest zwei oder mehr Datenverarbeitungskomponenten (**121, 132, 143)** rückkopplungsfrei zu übertragen.

6. Echtzeitcomputersystem nach einem der Ansprüche 1 bis 5, wobei die Verbindungsleitungen **(191)** zwischen den Datenerfassungskomponenten (**101, 102,103)** und/oder Datenverarbeitungskomponenten **(121,132,143)** einerseits und den Kommunikationssystemen (**110, 111)** andererseits galvanisch getrennt sind.

7. Echtzeitcomputersystem nach einem der Ansprüche 2 bis 6, wobei eine Datenverarbeitungskomponente **(121)** direkt auf einen Sensor **(261)** zugreift, der nur dieser Datenverarbeitungskomponente **(121)** zugeordnet ist.

8. Echtzeitcomputersystem nach einem der Ansprüche 2 bis 7, wobei es eine Entscheidungskomponenten **(150)** umfasst, und wobei jede Datenerfassungskomponente (**101, 102,103)** an diese Entscheidungskomponente **(150)** angeschlossen ist, wobei vorzugsweise die Entscheidungskomponente **(150)** fehlertolerante Hardware umfasst, auf welcher eine einfache Software ausgeführt wird.

9. Echtzeitcomputersystem nach Anspruch 8, wobei eine Datenverarbeitungskomponente, welche eine Verletzung der Annahmen betreffend das spezifizierte *Operational Design Domain (ODD)* erkennt, dies an die Entscheidungskomponente **(150)** mitteilt.

10. Echtzeitcomputersystem nach einem der Ansprüche 1 bis 9, wobei Funktionen, insbesondere alle Funktionen der Berechnung einer Trajektorie durch eine erste, insbesondere unsichere Datenverarbeitungskomponente **(121),** eine Überprüfung der Sicherheit dieser berechneten Trajektorie ausschließlich durch eine zweite, insbesondere unsichere Datenverarbeitungskomponente **(132),** und die Berechnung einer Notfalltrajektorie ausschließlich durch eine dritte, insbesondere unsichere Datenverarbeitungskomponente **(143)** durchgeführt wird, und vorzugsweise eine Entscheidungsfindung, ob ein Fehler vorliegt, durch eine, vorzugsweise einfache Entscheidungskomponente **(150)** durchgeführt wird.

## Claims

1. Real-time computer system **(100),** in particular distributed real-time computer system, for controlling a technical device, e.g. a technical plant or a machine, such as a robot or a vehicle, in particular a motor vehicle, the real-time computer system comprising
- data acquisition components **(101, 102, 103)** which are independent of one another, the data acquisition components **(101, 102, 103)** being set up for acquiring sensor data
- and data processing components **(121, 132, 143)** for processing the sensor data,
**characterized in that**
- data acquisition components **(101, 102, 103)** are insecure components,
- the real-time computer system **(100)** further comprises a time server **(115)** and a first communication system **(110)** and a second communication system **(111),**
- wherein the time server **(115)** is adapted to periodically send global time signals to the first communication system **(110)** via one or more unidirectional communication lines **(194)** and to the second communication system **(111)** via one or more unidirectional communication lines **(195),**
- wherein the communication systems **(110, 111)** are independent of each other,
- and wherein each data acquisition component **(101, 102, 103)** has at least two, preferably exactly two communication controllers **(192),** wherein each data acquisition component **(101, 102, 103)** communicates with one of the at least two communication controllers **(192)** via at least one, preferably exactly one communication line **(191)** to the first communication system **(110)** and to another of the at least two communication controllers **(192)** via at least one, preferably exactly one, communication line **(191)** to the second communication system **(111),** so that each data acquisition component **(101, 102, 103)** transmits its sensor data to each of the at least two communication systems **(110, 111).**
- and wherein each data processing component **(121, 132, 143)** has at least two, preferably exactly two communication controllers **(192),** wherein each data processing component **(121, 132, 143)** is connected with one of the at least two communication controllers **(192)** via at least one, preferably exactly one communication line **(191)** to the first communication system **(110)** and with another of the at least two communication controllers **(192)** via at least one, preferably exactly one communication line **(191)** to the second communication system **(111),** so that each communication system **(110, 111)** can transmit or transmit the sensor data received from the data acquisition components (101, 102, 103) to each of the data processing components (121, 132, 143), respectively transmits,
- such that each data processing component (121, 132, 143) can process the received sensor data.

2. Real-time computer system of claim 1, wherein the time server (115) is fault tolerant.

3. Real-time computer system according to claim 1 or 2, wherein one, in particular each data processing component (121) consists of processing subcomponents, VUK, (222, 223, 224) or comprises VUKs, which are arranged to exchange real-time data via a non-redundant, subordinate real-time communication system, a so-called real-time sub-communication system, wherein the real-time sub-communication system, respectively a message distributor unit (229) of the real-time sub-communication system, which takes over the sensor data transmitted to the data processing component (121), has at least two communication controllers (192), wherein one of the at least two communication controllers (192) is set up to take over the sensor data from the first communication system (110) and another communication controller (192) of the at least two communication controllers (192) is set up to take over the sensor data from the second communication system (111), and wherein the real-time sub-communication system or a message distribution unit (229) of the real-time sub-communication system comprises a further communication controller (192) to which it is connected to a decision component (150).

4. Real-time computer system according to any one of claims 1 to 3, wherein the at least two communication systems (110, 111) of the real-time computer system are real-time communication systems, in particular time-triggered real-time communication systems.

5. Real-time computer system according to any one of claims 1 to 4, wherein the real-time computer system (100) or the at least two independent communication systems (110, 111) is / are set up to transmit the sensor data to at least two or more data processing components (121, 132, 143) without feedback.

6. Real-time computer system according to any one of claims 1 to 5, wherein the connection lines (191) between the data acquisition components (101, 102, 103) and/or data processing components (121, 132, 143) on the one hand and the communication systems (110, 111) on the other hand are electrically isolated.

7. Real-time computer system according to any one of claims 2 to 6, wherein a data processing component (121) directly accesses a sensor (261) associated only with this data processing component (121).

8. Real-time computer system according to any one of claims 2 to 7, wherein it comprises a decision component (150), and wherein each data acquisition component (101, 102, 103) is connected to said decision component (150), preferably wherein said decision component (150) comprises fault-tolerant hardware on which simple software is executed.

9. Real-time computer system according to claim 8, wherein a data processing component which detects a violation of the assumptions concerning the specified operational design domain (ODD) communicates this to the decision component (150).

10. Real-time computer system according to any one of claims 1 to 9, wherein functions, in particular all functions of the calculation of a trajectory are performed by a first, in particular insecure data processing component (121), a check of the security of this calculated trajectory is performed exclusively by a second, in particular insecure, data processing component (132), and preferably a check of the security of this calculated trajectory is performed exclusively by a third, in particular insecure, data processing component (143), in particular uncertain data processing component (132), and the calculation of an emergency trajectory being carried out exclusively by a third, in particular uncertain data processing component (143), and preferably a decision as to whether an error is present being carried out by a, preferably simple, decision component (150).

## Revendications

1. Système informatique en temps réel (100), en particulier système informatique en temps réel réparti, pour la commande d'un dispositif technique, par exemple une installation technique ou une machine, comme par exemple un robot ou un véhicule, en particulier un véhicule automobile, le système informatique en temps réel comprenant
- des composants d'acquisition de données (101, 102, 103) qui sont indépendants les uns des autres, les composants d'acquisition de données (101, 102, 103) étant conçus pour acquérir des données de capteur,
- ainsi que des composants de traitement de données (121, 132, 143) pour traiter les données de capteur,
**caractérisé en ce que**
- les composants d'acquisition de données (101, 102, 103) sont des composants non sécurisés,
- le système informatique en temps réel (100) comprend en outre un serveur de temps (115) ainsi qu'un premier système de communication (110) et un deuxième système de communication (111),
- dans lequel le serveur de temps (115) est adapté pour envoyer périodiquement des signaux de temps globaux au premier système de communication (110) via une ou plusieurs lignes de communication unidirectionnelles (194) et au deuxième système de communication (111) via une ou plusieurs lignes de communication unidirectionnelles (195),
- dans lequel les systèmes de communication (110, 111) sont indépendants l'un de l'autre,
- et dans lequel chaque composant d'acquisition de données (101, 102, 103) dispose d'au moins deux, de préférence exactement deux contrôleurs de communication (192), dans lequel chaque composant d'acquisition de données (101, 102, 103) communique avec l'un des au moins deux contrôleurs de communication (192) par au moins une, de préférence exactement une ligne de communication (191) au premier système de communication (110) et avec un autre des au moins deux contrôleurs de communication (192) par au moins une, de préférence exactement une ligne de communication (191) au deuxième système de communication (111), de sorte que chaque composant de saisie de données (101, 102, 103) peut transmettre ou transmet ses données de capteur à chacun des au moins deux systèmes de communication (110, 111) transmettre,
- et chaque composant de traitement de données (121, 132, 143) disposant d'au moins deux, de préférence exactement deux contrôleurs de communication (192), chaque composant de traitement de données (121, 132, 143) étant relié au premier système de communication (110) par l'un des au moins deux contrôleurs de communication (192) via au moins une, de préférence exactement une ligne de communication (191) et à un autre des au moins deux contrôleurs de communication (192) via au moins une, de préférence exactement une ligne de communication (191) au deuxième système de communication (111), de sorte que chaque système de communication (110, 111) peut transmettre ou transmet les données de capteur reçues par les composants d'acquisition de données (101, 102, 103) à chacun des composants de traitement de données (121, 132, 143) transmettent,
- de sorte que chaque composant de traitement de données (121, 132, 143) peut traiter les données de capteur reçues.

2. Système informatique en temps réel selon la revendication 1, dans lequel le serveur de temps (115) est tolérant aux pannes.

3. Système informatique en temps réel selon la revendication 1 ou 2, dans lequel un, en particulier chaque, composant de traitement de données (121) est constitué de sous-composants de traitement, VUK, (222, 223, 224) ou comprend des VUK, qui sont adaptés pour échanger des données en temps réel par l'intermédiaire d'un système de communication en temps réel subordonné non redondant, appelé sous-système de communication en temps réel, dans lequel le sous-système de communication en temps réel ou le composant de traitement de données (121) comprend une unité de traitement de données (222, 223, 224). une unité de distribution de messages (229) du système de sous-communication en temps réel, qui prend en charge les données de capteur transmises au composant de traitement de données (121), dispose d'au moins deux contrôleurs de communication (192), l'un des au moins deux contrôleurs de communication (192) étant conçu pour prendre en charge les données de capteur du premier système de communication (110) et un autre contrôleur de communication (192) des au moins deux contrôleurs de communication (192) étant conçu pour prendre en charge les données de capteur du deuxième système de communication (111), et le système de sous-communication en temps réel ou l'unité de distribution de messages (229) du système de sous-communication en temps réel disposant d'au moins deux contrôleurs de communication (192). une unité de distribution de messages (229) du sous-système de communication en temps réel comprend un autre contrôleur de communication (192) avec lequel elle est reliée à un composant de décision (150).

4. Système informatique en temps réel selon l'une quelconque des revendications 1 à 3, dans lequel les au moins deux systèmes de communication (110, 111) du système informatique temps réel sont des systèmes de communication temps réel, en particulier des systèmes de communication temps réel temporisés.

5. Système informatique en temps réel selon l'une des revendications 1 à 4, dans lequel le système informatique en temps réel (100) ou les au moins deux systèmes de communication indépendants (110, 111) est/sont agencé(s) pour transmettre les données de capteur à au moins deux composants de traitement de données (121, 132, 143) ou plus, sans rétroaction.

6. Système informatique en temps réel selon l'une des revendications 1 à 5, dans lequel les lignes de connexion (191) entre les composants d'acquisition de données (101, 102, 103) et/ou les composants de traitement de données (121, 132, 143) d'une part et les systèmes de communication (110, 111) d'autre part sont isolées galvaniquement.

7. Système informatique en temps réel selon l'une des revendications 2 à 6, dans lequel un composant de traitement de données (121) accède directement à un capteur (261) associé uniquement à ce composant de traitement de données (121).

8. Système informatique en temps réel selon l'une quelconque des revendications 2 à 7, dans lequel il comprend un composant décisionnel (150), et dans lequel chaque composant d'acquisition de données (101, 102, 103) est connecté à ce composant décisionnel (150), de préférence le composant décisionnel (150) comprenant un matériel tolérant aux pannes sur lequel est exécuté un logiciel simple.

9. Système informatique en temps réel selon la revendication 8, dans lequel un composant de traitement de données qui détecte une violation des hypothèses concernant le domaine de conception opérationnelle (ODD) spécifié le signale au composant de décision (150).

10. Système informatique en temps réel selon l'une des revendications 1 à 9, dans lequel des fonctions, notamment toutes les fonctions de calcul d'une trajectoire par un premier composant informatique (121), notamment non sécurisé, une vérification de la sécurité de cette trajectoire calculée est effectuée exclusivement par un deuxième composant informatique (132), notamment non sécurisé, en particulier non sécurisé (132), et le calcul d'une trajectoire de secours est effectué exclusivement par un troisième composant de traitement de données (143), en particulier non sécurisé, et de préférence une prise de décision quant à la présence d'une erreur est effectuée par un composant de décision (150), de préférence simple.
